# EUROPÄISCHE PATENTANMELDUNG

(11) **EP 1 106 296 A2**
(43) Veröffentlichungstag der Anmeldung: **13.06.2001**
(21) Anmeldenummer: 00121812.2
(22) Anmeldetag: 06.10.2000
(51) Int. Cl.: B23K 10/00, B22D 31/00

(54) **Verfahren zum Entgraten von Guss-, Spritz- und Schmiedeteilen**

(30) Priorität: 03.12.1999 DE 19958439
(71) Anmelder: Müller Weingarten AG, D-88250 Weingarten (DE)
(72) Erfinder: Stummer, Friedrich Georg, Dr.-Ing., 70736 Fellbach (DE)
(74) Vertreter: Patentanwälte Eisele, Otten, Roth & Dobler

(57) **Zusammenfassung**

Die Erfindung betrifft ein Verfahren zum Entgraten spanlos hergestellter Teile 1 aus elektrisch leitenden Werkstoffen mittels Plasmaschneiden. Zur Vermeidung einer Vielzahl von Zündvorgängen schlägt die Erfindung vor Formen derart auszubilden, dass sich bei der Herstellung von Teilen 1 ein weitgehend ununterbrochener Grat 4 bildet und dadurch der Lichtbogen des Plasmaschneidens nicht unterbrochen wird.

Am Beispiel eines Druckgußteils wird die Erfindung näher erläutert.

## Beschreibung

Die Erfindung betrifft ein Verfahren zum Trennen von Graten, bei Guß-, Spritz- und Schmiedeteilen durch Plasmaschneiden. Schneid- bzw. entgratbar sind dabei alle Teile aus elektrisch leitenden Metall-Legierungen und Kunststoffen. Insbesondere Teile die durch folgende Verfahren hergestellt werden:
- Schwerkraft Gußteile
- Niederdruck Gußteile
- Druckgußteile
- Thixomolding Teile
- Squeeze-Casting Teile
- Kunststoff Spritzteile
- Schmiedeteile
- Varianten der aufgeführten Teile-Herstellverfahren

### Stand der Technik

In der Regel werden diese Teile auf vollautomatisierten Anlagen hergestellt. Unter Ausnutzung modernster Techniken ist es das Ziel, eine hohe Wirtschaftlichkeit bei guter Teilequalität zu erreichen.

Entwicklungen im Bereich der Teileentgratung fanden nicht im gleichen Maße statt. Auf die im Produktionsprozeß anteiligen hohen Kosten wurde bereits 1974 vom Fachausschuß Druckguß bei einem Fortbildungsseminar für Druckgießer hingewiesen. Die im Tagungsbericht in der Zeitschrift Werkstatt-Technik 1974/9 veröffentlichten Werte ergeben, bezogen auf die gesamten Fertigungskosten, anteilig für das Entgraten von Aluminium-und Magnesiumdruckgußteilen 20 % und bei Zink-Druckgußteilen sogar 34 % der Kosten des gesamten Herstellungsprozeßes.

Üblich ist dabei die Entfernung von Grat, Gießlauf, Luftbohnen, Anschnitt, Entlüftungskanäle usw. durch ein mechanisches Abtrennen wie Schneidentgraten, vorwiegend unter Verwendung hydraulischer Pressen. Zur Anwendung kommt auch sägen und entgraten von Hand.

Weiterhin sind dem Fachmann auch Muldenbandtrommeln mit Schleuderrad und auch thermische Entgratmethoden unter Einsatz eines Knallgasgemisches bekannt.

In der DE-OS 20 41 058 wird ein Verfahren zum Entgraten mittels Ultraschallenergie beschrieben. Unter Verwendung von Energie im Überschallfrequenzbereich werden z.B. bei thermoplastischen Formteilen Grate entfernt. Dünne Angüsse werden durch Schallenergie aufgeheizt und verdampft.

Die beschriebenen Verfahren erfordern entweder hohe Investitionen für Pressen und teilespezifische Werkzeuge oder haben sich in der Praxis nicht oder nur eingeschränkt bewährt.

### Aufgabe und Vorteil der Erfindung

Die Erfindung mit den kennzeichnenden Merkmalen des Anspruch 1 stellt sich die Aufgabe ein Verfahren vorzuschlagen, welches wirtschaftlich und hochflexibel zum Entgraten von Guß-, Spritz- und Schmiedeteilen einsetzbar ist.

Die Erfindung schlägt vor, Formen so zu gestalten, dass die darin hergestellten Werkstücke problemlos durch Plasmaschneiden entgratbar sind.

Das Plasmaschneiden setzt, als thermisches Trennverfahren von Werkstoffen, ausschließlich die elektrische Energie des Lichtbogens ein.

Chemische Reaktionen mit dem Werkstoff, wie sie z.B. beim Brennschneiden auftreten, sind bei dem Plasma-Schneidprozeß nur begrenzt gegeben. Trennen lassen sich sämtliche elektrisch leitenden Stoffe, dabei kann das Werkstück als Anode in den Schneidstromkreis geschaltet sein. Besondere Bedeutung hat das Plasmaschneiden bei den Werkstoffen die nicht brennschneidbar sind. Das trifft insbesondere bei Zink, Aluminium, Magnesium und deren Legierungen und bei Kunststoffen zu.

Ein wesentlicher Vorteil des Plasmaschneidverfahrens ist die Möglichkeit mit hoher Geschwindigkeit dünne Querschnitte zu schneiden. Bei geringer Materialdicke sind Vorschubgeschwindigkeiten bis über lOm/min. erreichbar. Dabei ist auch der Einsatz von Koordinaten-Schneidmaschinen die fotoelektrisch oder numerisch gesteuert werden, von großem Vorteil. Da diese Maschinen beliebige Konturen abfahren können, ist auch eine ausgezeichnete Flexibilität gewährleistet.

Durch den Einsatz von Hochleistungsbrennern, die den Lichtbogen stark bündeln, sind parallele Schnittfugen zu erreichen, die unter Umständen keine weiteren Nacharbeiten am Werkstück erforderlich machen. Günstig auf die Wirtschaftlichkeit wirkt sich auch der geringe Energieverbrauch aus.

Da der Werkstoff wie beschrieben als Anode wirkt, ist die Verwendung des Plasmaschneidens in der Druck- und Spritzgußtechnik bei der Gestaltung der Teile nach dem Stand der Technik nicht wirtschaftlich. Ursache hierfür ist die Tatsache, dass Anschnitt, Gießlauf, Gießlaufgrate, Entlüftungsfahnen, Entlüftungsbohnen usw. keinen geschlossenen Linien- und Flächenzug darstellen. In der Praxis befindet sich jeweils zwischen den einzelnen Elementen ein Zwischenraum ohne Material. Da aber bei dem Plasmaschneiden ein laufender Energiefluß zwischen Plasma-Lichtbogen und dem elektrisch leitenden Material erforderlich ist, wird bei jeder Aussparung der Energiefluß unterbrochen. Dies führt zum Abreißen des Plasmalichtbogens, wodurch nach jeder Aussparung dieser neu gezündet werden muß, wobei die Zündvorgänge zwischen 1 bis mehrere Sekunden betragen. Zusätzlich ist dabei jedesmal ein neues Anschneiden des Materials erforderlich, wodurch optische Fehlstellen an der Schnittfuge auftreten. Die Erfindung schlägt deshalb vor, im Bereich der Anschnitte und Anbindungen durchgehend ein Füllstück geringer Breite und Dicke anzugießen bzw. anzuspritzen. Beispielhaft kann die Füllstück- bzw. Platinenbreite 5 mm und die Dicke 0,2 ÷ 0,5 mm betragen.

Erreicht wird dieses durch eine entsprechende Formgestaltung, in dem alle Gießüberstände bzw. Grate durch in die Formgravur eingearbeitete Übergänge geringer Tiefe miteinander als am Gußteil umlaufender Rand verbunden werden. Ein weiteren Vorteil der Erfindung ist, dass durch diese einmalige Maßnahme sämtliche in der Form hergestellten Teile die für das Plasmaschneiden erforderlich geschlossene Gratkontur aufweisen.

Ebenfalls vorteilhaft ist, dass durch diese Maßnahme eine Verbesserung der Formentlüftung im Bereich des Werkstückes erreicht wird. Die im Gratbereich vorhandenen Lufteinschlüsse und andere Gefügeeinflüße befinden sich nicht im eigentlichen Teil und verbessern so die Teilequalität.

Durch Berechnung, Erfahrung oder durch im praktischen Gießbetrieb erzielbaren Ergebnissen kann der geschlossene Linienzug bzw. die Füllflächen individuell im Formbereich gestaltet werden. Eine deutliche Reduzierung unerwünschter Einschlüsse und damit eine günstigere Gefügestruktur am Teil ist erreichbar.

Aufgrund der geringen Dimensionen der oben beschriebenen Füllstück-Flächen ist der erforderliche zusätzlich zu vergießende Materialanteil ein vernachlässigbarer Kostenfaktor. Mit den vorgeschlagenen Modifizierungen der Form und dem Einsatz von Plasmaschneidverfahren wird durch geringen Aufwand eine hohe Prozess-Sicherheit bei hoher Flexibilität erreicht.

In den Unteransprüchen sind vorteilhafte Weiterbildungen und Verbesserungen des erfindungsgemäßen Verfahrens angegeben. In der nachfolgenden Gegenüberstellung des Stand der Technik mit der Gestaltung gemäß der Erfindung werden weitere Einzelheiten und Vorteile an den 2 Figuren näher erläutert.

Es zeigen
- Fig. 1: Eine Frontansicht auf ein Teil gestaltet nach dem Stand der Technik
- Fig. 2: wie Figur 1, jedoch ergänzt um den erfinderischen Gedanken

### Beschreibung der Erfindung

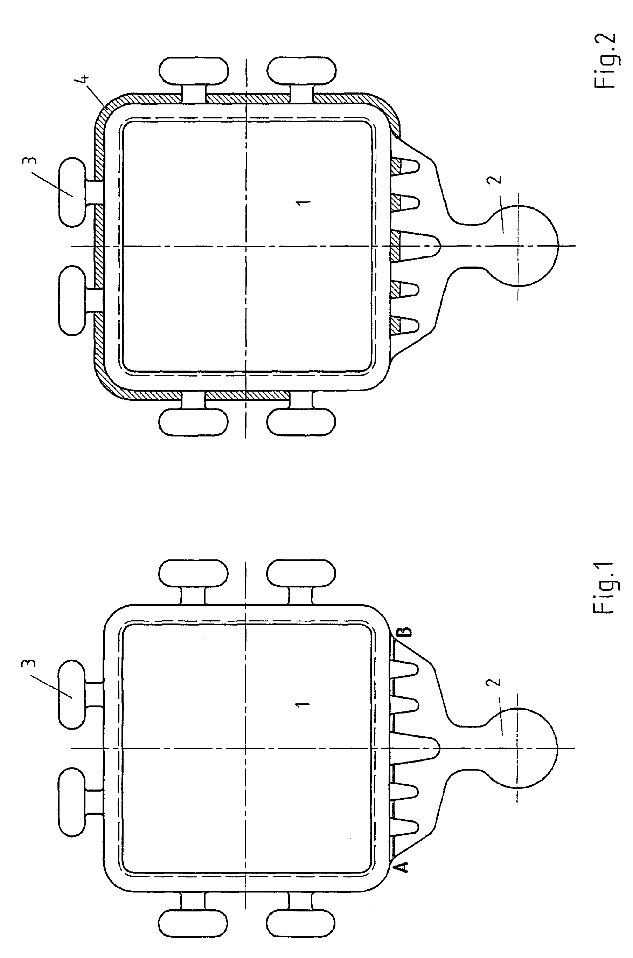

In Figur 1 ist das Teil oder Werkstück 1 nach dem spanlosen Umform- oder Gießprozeß vor dem Entgraten dargestellt.

Beispielhaft kann Teil 1 ein Druckgußteil sein.

Ausgehend von Gießlaufsystem 2 findet die Formfüllung mit dem flüssigen Werkstoff statt. Der Gießlauf 2 unterliegt dabei sehr speziellen Gestaltungsregeln um eine sichere Formfüllung und Nachverdichtung vor dem Erstarren des Werkstoffes zu gewährleisten.

An der Außenkante der eigentlichen Teilekontur befinden sich Luftbohnen 3, die in Anzahl und Lage abhängig vom Teil 1 sind. Hervorgerufen durch Formverschleiß bzw. Ausschwemmungen in der Formtrennebene könnte auch noch ein Gußgrat vorhanden sein. Wenn die Formfüllung durch eine Formevakuierung unterstützt wird, so befinden sich die entsprechenden Absaugkänäle ebenfalls an der Teilekontur. Ebenso befinden sich dort Anschnitte des Gießlaufsystems.

Vereinfacht werden alle diese Überstände als Grat bezeichnet und deren Entfernung soll gemäß der Erfindung durch Plasmaschneiden erfolgen.

Wie bereits beschrieben, erfordert der Aufbau des Plasma-Lichtbogens jeweils als Anode den zu schneidenden Werkstoff. Am Beispiel des Anschnittes des Gießlaufes 2 an das Teil 1 ist die Vielzahl von Aussparungen dargestellt. Wird das Plasmaschneiden zum Entgraten des Gießlaufes eingesetzt, so müßte zum Abfahren der Strecke A-B der Plasma-Lichtbogen 12 mal gezündet werden. Bei einem mittleren Zündwert von 3,5 Sekunden würden nur für den Zündvorgang 42 Sekunden benötigt.

Aus diesem Grund ist das Plasmaschneiden als Entgratung für Teile die nach dem Stand der Technik gestaltet sind unwirtschaftlich.

In Figur 2 ist das Teil 1 gemäß dem erfinderischen Gedanken dargestellt. Durch die Einarbeitung von Vertiefungen geringer Dicke und Breite in der Form ergibt sich am Teil 1 eine für das Plasmaschneiden erforderliche Fläche bzw. Linienzug. Die schraffierte Fläche füllt alle zwischen dem Gießlauf 2 und Luftbohnen 3 vorhandenen Zwischenräume aus. Mit einer einmaligen Zündung kann die gesamte Entgratung von Teile 1 durchgeführt werden. Beliebige Konturen können von Hand oder durch die Verwendung von Koordinaten-Plasmaschneidmaschinen entgratet werden.

Die Erfindung ist nicht auf das dargestellte und beschriebene Gestaltungsbeispiel beschränkt. Sie umfaßt auch alle fachmännischen Weiterbildungen im Rahmen der Schutzrechtsansprüche. So kann die Erfindung dann auf eine geschlossene Fläche bzw. Linienzug verzichten, wenn durch eine geringe Zahl von Unterbrechungen im Bereich ohne Entgratanteil trotzdem ein wirtschaftliches Entgraten möglich ist.

## Patentansprüche

1. Verfahren zur Entgratung spanlos hergestellter Teile (1), dadurch gekennzeichnet, dass Teile (1) aus elektrisch leitenden Stoffen hergestellt werden und wobei Formen durch Einbringung von Vertiefungen so gestaltet werden, dass dadurch am Teil (1) entstehende Grade (4) einen geschlossenen weitestgehenden ununterbrochenen Linienzug oder Flächen bilden und wobei dieser Grad mittels Plasmaschneiden entfernbar ist.

2. Verfahren nach Anspruch 1 und 4, dadurch gekennzeichnet, dass der Grad (4) am Teil (1) einen geschlossenen Linienzug oder Fläche bildet.

3. Verfahren nach Anspruch 1, dadurch gekennzeichnet, dass der Grad (4) am Teil (1) in seinem Verlauf von unterschiedlicher Dicke und/oder Breite ist.

4. Verfahren nach Anspruch 1, dadurch gekennzeichnet, dass die Entgratung durch Hochleistungsbrennern mit stark gebündelten Lichtbogen erfolgt.

5. Verfahren nach Anspruch 1, dadurch gekennzeichnet, dass ein Hochleistungsbrenner in Wirkverbindung mit einer fotoelektrisch oder numerisch gesteuerten Koordinaten-Schneidmaschine steht.

6. Verfahren nach Anspruch 1, dadurch gekennzeichnet, dass der Grad (4) von geringer Dicke und/oder Breite ist.
